# EUROPEAN PATENT APPLICATION

(11) **EP 3 978 239 A1**
(43) Date of publication of application: **06.04.2022**
(21) Application number: 20813019.5
(22) Date of filing: 22.05.2020
(51) Int. Cl.: B32B 27/00, B65D 83/00, B05B 5/16, B32B 7/02

(54) **CARTRIDGE FOR ELECTROSTATIC SPRAYING DEVICE**

(30) Priority: 31.05.2019 JP 2019102850; 31.10.2019 JP 2019199377
(71) Applicant: Kao Corporation, Chuo-ku Tokyo 103-8210 (JP)
(72) Inventor: GOTO Hiroshi, Odawara-shi, Kanagawa 250-0002 (JP); MATSUMOTO Shuhei, Odawara-shi, Kanagawa 250-0002 (JP); FUJII Yumi, Tokyo 131-8501 (JP); OSAWA Kiyoteru, Tokyo 131-8501 (JP)
(74) Representative: Hoffmann Eitle
(86) International application number: PCT/JP2020/020410
(87) International publication number: WO 2020/241525

(57) **Abstract**

A cartridge for an electrostatic spraying device according to the present invention is a cartridge for an electrostatic spraying device, the cartridge comprises a storage bag having a storage section in which a liquid composition is stored, the storage section is surrounded by a joint portion formed by joining a pair of laminates, each of the laminates comprises an innermost layer on the joint portion side, an outermost layer on a side opposite to the innermost layer, and a barrier layer between the innermost layer and the outermost layer, and the liquid composition comprises 50 mass% or more of a volatile liquid agent selected from alcohols and ketones.

## Description

### Technical Field

The present invention relates to a cartridge, storing a liquid composition, for an electrostatic spraying device.

### Background Art

Conventionally, there has been an electrostatic spraying device that sprays a liquid composition by electrostatic force (JP 2007-521941 W). Such an electrostatic spraying device stores a liquid to be sprayed to a cartridge detachable from the device main body, and the cartridge includes an insulating container for storing the liquid to be sprayed. Further, as a container for storing a liquid, a packaging bag made of a multilayer film has also been proposed (JP 2018-114755 A). The multilayer film used here is a laminate including polyethylene terephthalate as a substrate film.

### Summary of Invention

The present invention relates to a cartridge for an electrostatic spraying device, the cartridge comprises a storage bag having a storage section in which a liquid composition is stored, the storage section is surrounded by a joint portion formed by joining a pair of laminates, the laminates comprise an innermost layer on the joint portion side, an outermost layer on a side opposite to the innermost layer, and a barrier layer between the innermost layer and the outermost layer, and the liquid composition comprises 50 mass% or more of a volatile liquid agent selected from alcohols and ketones.

### Brief Description of Drawings

Fig. 1 is a perspective view illustrating a cartridge for an electrostatic spraying device according to the present embodiment.
Fig. 2 is a front view illustrating the cartridge for an electrostatic spraying device according to the present embodiment.
Fig. 3 is a configuration diagram illustrating members on an engagement side of a disassembled nozzle portion in the cartridge for an electrostatic spraying device according to the present embodiment.
Fig. 4 is a configuration diagram illustrating members on a nozzle side of the disassembled nozzle portion in the cartridge for an electrostatic spraying device according to the present embodiment.
Fig. 5 is a schematic diagram illustrating a cross-sectional configuration of a storage bag in the cartridge for an electrostatic spraying device according to the present embodiment.
Fig. 6 is a perspective view illustrating an electrostatic spraying device in a state in which a cap is removed.
Fig. 7 is an exploded perspective view illustrating an electrostatic spraying device main body.
Fig. 8 is a perspective view illustrating a state in which the electrostatic spraying device is mounted on a mounting table.
Fig. 9 is a perspective view illustrating the mounting table.

### Description of Embodiments

When a liquid composition containing a highly volatile liquid agent is stored in a conventional container formed of a laminate, there is a problem that the liquid composition permeates and delaminates between layers of the laminate. When a print is made on the surface of the layer in the laminate, the print may be damaged by the permeating liquid composition.

The present invention relates to a cartridge for an electrostatic spraying device, and the cartridge includes a storage bag formed of laminates, prevents delamination of the laminates, and can store a liquid composition containing a volatile liquid agent.

The cartridge for an electrostatic spraying device according to the present invention includes the storage bag formed of the laminates, and can prevent delamination of the laminates and store a liquid composition containing a volatile liquid agent.

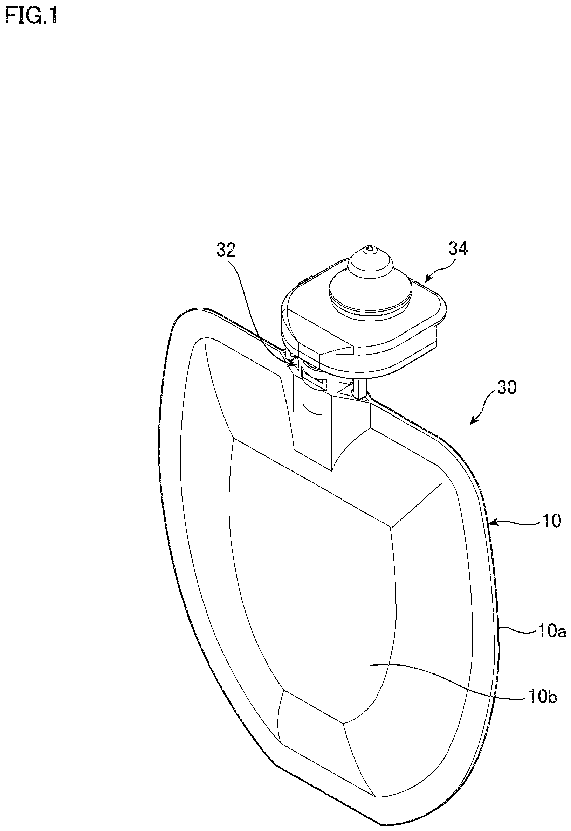

Hereinafter, embodiments of the present invention will be described in detail with reference to the accompanying drawings. As illustrated in Fig. 1, a cartridge 30 for an electrostatic spraying device according to the present embodiment includes a storage bag 10 storing a liquid composition, a nozzle portion 34 for spraying the liquid composition in the storage bag 10, and a connecting portion 32 for connecting the storage bag 10 to the nozzle portion 34. Note that the nozzle portion 34 is not necessarily connected to and integrated with the storage bag 10, and may be prepared as a separate body from the storage bag 10.

The separate nozzle portion 34 can be attached to the connecting portion 32 of the storage bag 10 when the cartridge for an electrostatic spraying device is used.

The cartridge 30 for an electrostatic spraying device stores a predetermined liquid composition containing a volatile liquid agent, and is replaceably attached to the device main body of the electrostatic spraying device. The electrostatic spraying device is a handheld device having a shape and a size that can be held by a user's hand, and is a device that sprays a liquid composition toward an object by an electrostatic spraying method. The electrostatic spraying method is a method of electrostatically charging (electrostatically charging) a liquid composition by applying a high voltage (for example, several kV to several tens of kV) to the liquid composition, and spraying the liquid composition toward an object by electrostatic force based on a potential difference between the charged liquid composition and the object.

The liquid composition sprayed by the electrostatic spraying method is delivered toward an object in the form of an ultrafine thread. The sprayed liquid composition can form a coating film on a surface of an object by drying a solvent, which is the volatile liquid agent, in a process of being sprayed and delivered toward the object and after being attached to the object. The coating film is preferably a deposit containing fibers. The electrostatic spraying device can also be used as an electrostatic spinning device that sprays a solution containing a raw material for electrostatic spinning, that is, a liquid composition toward an object.

As illustrated in Fig. 1, the storage bag 10 in the cartridge 30 for an electrostatic spraying device according to the present embodiment includes an outer edge 10a and a flexible region 10b inside the outer edge. The inner flexible region 10b has flexibility capable of being deformed according to a change in the volume of the liquid composition stored. The storage bag 10 is formed of laminates in which predetermined layers are laminated. The configuration of the laminates will be described in detail later.

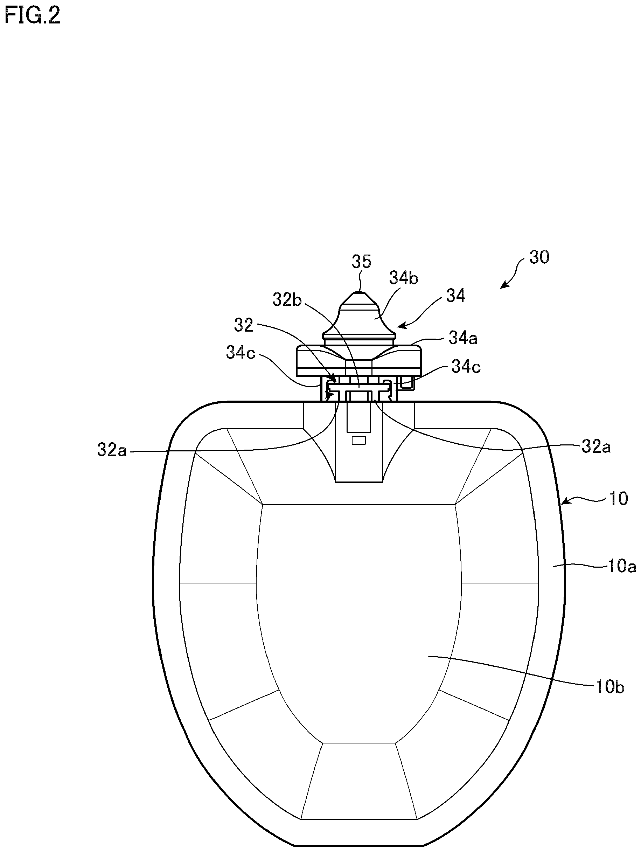

As illustrated in Fig. 2, the nozzle portion 34 in the cartridge 30 for an electrostatic spraying device includes a base 34a having a flat rectangular shape, a nozzle 34b extending from an upper surface of the base 34a, an inflow pipe (not illustrated) extending from a lower surface of the base 34a, and a pair of engaging pieces 34c extending from the lower surface of the base 34a. The nozzle portion 34 is preferably made of a material resistant to the liquid composition stored in the storage bag 10. Specifically, it is selected from high density polyethylene (HDPE), polyacetal (POM), polyamide (PA), polypropylene (PP), polybutylene terephthalate (PBT), synthetic rubber, and the like. The resistance is to the volatile liquid agent of the liquid composition.

Although details will be described later, a flow path connecting the inflow pipe to the nozzle 34b is formed inside the base 34a, and a pump (for example, a gear pump) and a small electrode are disposed in the flow path. The pump is configured to be driven to suck the liquid composition and cause the liquid composition to flow through the flow path, and the small electrode is configured to charge the liquid composition flowing additionally electrostatically in the flow path. The pump is housed in the base 34a. In the present embodiment, the small electrode is a flow path forming plate 131 and a cover electrode 135 described later.

The inflow pipe is formed in a cylindrical shape configured to be able to be fitted into the connecting portion 32, and is configured to connect the internal flow path (not illustrated) of the connecting portion 32 to the flow path of the base 34a. As illustrated in Fig. 2, the nozzle 34b is provided with a spray hole 35 at the tip, and has a nozzle flow path connecting the flow path of the base 34a to the ejection hole 35. The pair of engaging pieces 34c is configured to be engageable with the upper end periphery portion of the connecting portion 32.

The connecting portion 32 is welded between the laminates constituting the storage bag 10 such that the upper end is located outside the storage bag 10 and the lower end is located inside the storage bag 10. The connecting portion 32 is preferably made of a material that has resistance to the liquid composition stored in the storage bag 10 and has compatibility with the innermost layer of the storage bag 10. For example, when the material used for the innermost layer is cast polypropylene (CPP) or linear low density polyethylene (LLDPE), the connecting portion 32 is made of polypropylene (PP), high density polyethylene (HDPE), or the like.

The connecting portion 32 has an inner diameter into which the inflow pipe of the nozzle portion 34 can be fitted. As illustrated in Fig. 2, a pair of column portions 32a and an engaging plate portion 32b bridged between the pair of column portions 32a are provided at one end of the connecting portion 32. The engaging plate portion 32b extends outward from both column portions 32a, and is configured such that the pair of engaging pieces 34c of the nozzle portion 34 can be locked to the extending portion.

The nozzle portion 34 is configured to be attached to the connecting portion 32 by engaging the pair of engaging pieces 34c with the engaging plate portion 32b of the connecting portion 32 in a state where the inflow pipe is inserted in the connecting portion 32.

As described above, the cartridge 30 for an electrostatic spraying device is detachable from the device main body of the electrostatic spraying device that sprays the liquid composition by applying a voltage to the liquid composition, and further includes the connecting portion 32 to which the nozzle portion 34 that sprays the liquid composition is connected, and the pump that guides the liquid composition to the spray hole 35 of the nozzle portion 34.

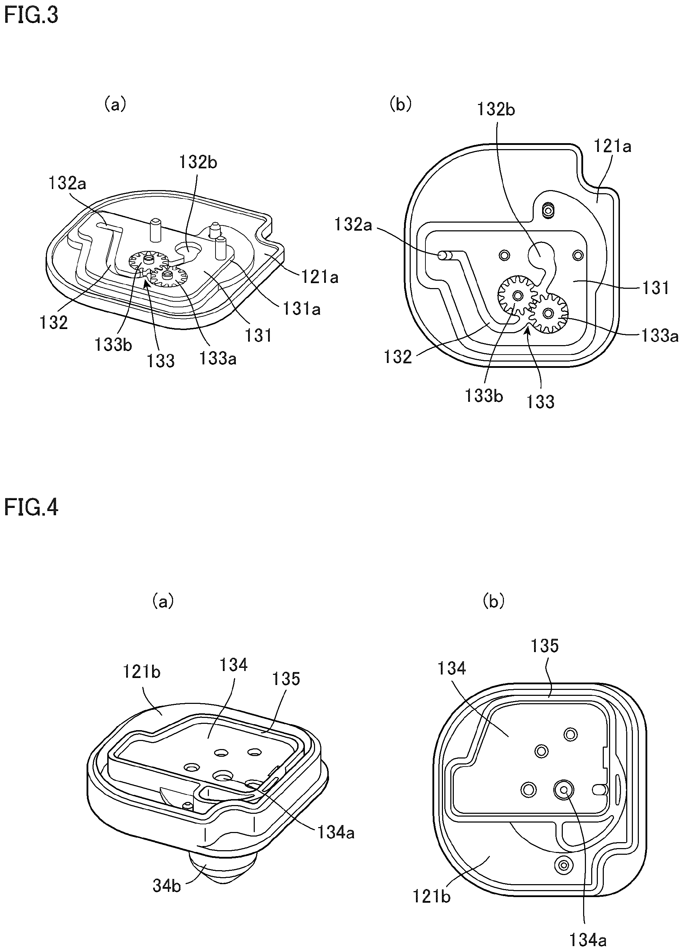

Here, the internal configuration of the base 34a of the nozzle portion 34 will be described with reference to Figs. 3 and 4. The base 34a is configured to be disassembled into a member 121a on an engagement side and a member 121b on a nozzle side. The inflow pipe is disposed on an outer surface side (a lower surface in Fig. 3(a)) of the member 121a on the engagement side, and the nozzle 34b is disposed on an outer surface side (a lower surface in Fig. 4(a)) of the member 121b on the nozzle side.

The member 121a on the engagement side and the member 121b on the nozzle side are formed of an insulating material, and the inner surface side of the member 121a on the engagement side and the inner surface side of the member 121b on the nozzle side are closely joined to each other, thereby forming the outer shell casing of the base 34a.

As illustrated in Figs. 3(a) and 3(b), the flow path forming plate 131 is provided on the inner surface of the member 121a on the engagement side. A flow path groove 132 is formed in the flow path forming plate 131. The inflow end 132a of the flow path groove 132 is connected to the connecting portion 32 via the inflow pipe. The discharge end 132b of the flow path groove 132 is a portion connected to the hole 134a (see Figs. 4(a) and 4(b)) of the member 121b on the nozzle side.

As illustrated in Figs. 4(a) and 4(b), a pump cover 134 is provided on the inner surface of the member 121b on the nozzle side, and the cover electrode 135 is provided between the member 121b on the nozzle side and the pump cover 134. The hole 134a communicating with the nozzle 34b is formed in the pump cover 134 at a position corresponding to the discharge end 132b of the flow path forming plate 131. In addition, the cover electrode 135 has a wall surface formed upright on the member 121a side on the engagement side and extending along the outer edge thereof.

When the inner surface side of the member 121a on the engagement side and the inner surface side of the member 121b on the nozzle side are closely joined, the wall surface of the cover electrode 135 is fitted to the outer edge 131a of the flow path forming plate 131, and the entire surface of the pump cover 134 is in close contact with the flow path forming plate 131 to seal the flow path groove 132. As a result, a flow path (pump chamber) extending along the flow path groove 132 is formed in the nozzle portion. The pump is housed in the pump chamber. Therefore, the liquid composition flowing in from the inflow end 132a can flow through the flow path (flow path groove 132) to reach the discharge end 132b, and further can flow into the nozzle 34b through the hole 134a.

As illustrated in Figs. 3(a) and 3(b), the gear pump 133 constituted by gears 133a and 133b is disposed in the middle of the flow path (pump chamber). The flow path (pump chamber) can also be referred to as a liquid contact portion in contact with the liquid composition. The pump chamber is preferably made of a material resistant to the liquid composition. Specifically, the pump chamber is made of polypropylene.

The flow path forming plate 131 and the cover electrode 135 are formed of a conductive material, and function as an electrode to which a voltage can be applied from a high-voltage generator of the electrostatic spraying device. By providing the flow path forming plate 131 and the cover electrode 135, the liquid composition can be electrostatically charged by applying a voltage to the storage bag 10, the flow path forming plate 131, and the cover electrode 135 in the electrostatic spraying device using the cartridge 30 for an electrostatic spraying device according to the present embodiment.

In the present specification, the "conductive material" includes a conductive material such as metal or carbon, has low electric resistance, and is a material through which electricity easily flows. In the present specification, the "conductive material" refers to a substance having a volume resistivity (ASTM D 257, JIS K6911) of, for example, 10² Ωm or less, preferably 10 Ωm or less. In this case, for example, a technique of charging the liquid composition flowing in the flow path (flow path groove 132) in the flow path groove 132 can be adopted.

The gear pump 133 and the pump cover 134 are made of an insulating material. The "insulating material" is a material that does not contain a conductive material such as metal or carbon, has high electric resistance, and is less likely to cause electricity to flow. In the present specification, it refers to a substance having a volume resistivity of, for example, 10¹⁰ Ωm or more, preferably 10¹² Ωm or more. As the insulating material, an organic material such as a synthetic resin, or an inorganic material such as glass or ceramic can be used.

In the present embodiment, the flow path forming plate 131, the gear pump 133, and the pump cover 134 are formed of a material resistant to the liquid composition. Specific examples of the material include polypropylene (PP), polyethylene terephthalate (PET), polyethylene (PE), polyacetal (POM), polybutylene terephthalate (PBT), polyvinyl chloride (PVC), polytetrafluoroethylene (PTFE), and polyphenylene sulfide (PPS). The material is formed of a material having solvent resistance to a solvent such as ethanol.

In the present specification, "having resistance to a liquid composition" means "solvent resistance" to the volatile liquid agent of the liquid composition, and "solvent resistance" means that permeation and volatilization of the volatile liquid agent in the liquid composition are suppressed, and that it is hard to swell and deform due to the liquid composition. Among the solvent resistant materials, polypropylene (PP) is preferable because it has a particularly large effect of suppressing permeation and volatilization of the volatile liquid agent in the liquid composition. It is preferable that the material for the pump chamber be entirely polypropylene (PP), but a part of the material may be polypropylene (PP), and the other part may be formed of another material having solvent resistance.

Further, the member 121a on the engagement side of the base 34a of the nozzle portion 34, the member 121b on the nozzle side, and the nozzle 34b are also preferably formed of an insulating material having solvent resistance to a solvent such as ethanol, such as polypropylene (PP), polyethylene terephthalate (PET), polyethylene (PE), polyacetal (POM), polybutylene terephthalate (PBT), polyvinyl chloride (PVC), polytetrafluoroethylene (PTFE), or polyphenylene sulfide (PPS) .

In the present embodiment, the flow path forming plate 131 and the pump cover 134 that form the pump chamber, and the gear pump 133 are made of a solvent resistant material having resistance to the liquid composition. For this reason, even when brought into contact with a liquid composition containing a solvent such as ethanol, there is almost no possibility that such members swell or deform. In addition, permeation and volatilization of a volatile liquid agent such as ethanol can be suppressed.

Therefore, even when a liquid composition using ethanol as a solvent, for example, a liquid composition in which polyvinyl butyral (PVB) is dissolved in ethanol is used, good operability of equipment including the gear pump 133 can be secured. Thereby, the liquid composition can be more stably and continuously sprayed.

In the present embodiment, the conductive material is used for the flow path forming plate 131, but the present invention is not limited thereto, and an insulating resin can be adopted in a case where it is not allowed to function as an electrode.

Next, the liquid composition stored in the storage bag 10 will be described. The liquid composition contains 50 mass% or more of a volatile liquid agent selected from an alcohol and a ketone. The volatile liquid agent is a substance having volatility in a liquid state. The volatile liquid agent has a vapor pressure of preferably 0.01 kPa or more and 106.66 kPa or less, more preferably 0.13 kPa or more and 66.66 kPa or less, still more preferably 0.67 kPa or more and 40.00 kPa or less, and still more preferably 1.33 kPa or more and 40.00 kPa or less at 20°C.

As the alcohol, for example, a monovalent chain aliphatic alcohol, a monovalent cyclic aliphatic alcohol, or a monovalent aromatic alcohol is preferably used. Examples of the monovalent chain aliphatic alcohol include C₁ to C₆ alcohols, and examples of the monovalent cyclic alcohol include C₄ to C₆ cyclic alcohols. Examples of the monovalent aromatic alcohol include a benzyl alcohol and a phenylethyl alcohol.

Specific examples thereof include ethanol, isopropyl alcohol, butyl alcohol, phenylethyl alcohol, n-propanol, and n-pentanol. These alcohols may be used singly or in combination of two or more kinds thereof.

On the other hand, examples of the ketone include C₁ to C₄ dialkyl ketones such as acetone, methyl ethyl ketone, and methyl isobutyl ketone. These ketones may be used singly or in combination of two or more kinds thereof.

The volatile liquid agent is preferably one kind or two or more kinds selected from ethanol, isopropyl alcohol, and butyl alcohol, and more preferably one kind or two kinds selected from ethanol and butyl alcohol. It is more preferable that the volatile liquid agent contain ethanol because fibers comfortable to touch can be formed.

The content of the volatile liquid agent in the liquid composition is 50 mass% or more. The content of the volatile liquid agent is preferably 55 mass% or more, and more preferably 60 mass% or more. In addition, the content is preferably 95 mass% or less, more preferably 94 mass% or less, and still more preferably 93 mass% or less. When the liquid composition contains one kind or two or more kinds contained from an oil agent and a polyol, the content of the volatile liquid agent in the liquid composition is preferably 90 mass% or less, and more preferably 85 mass% or less.

The content of the volatile liquid agent is preferably 50 mass% or more and 95 mass% or less, more preferably 55 mass% or more and 94 mass% or less, and still more preferably 60 mass% or more and 93 mass% or less. When the liquid composition contains one or more kinds selected from an oil agent and a polyol, the content of the volatile liquid agent is preferably 50 mass% or more and 90 mass% or less, more preferably 55 mass% or more and 85 mass% or less, and still more preferably 60 mass% or more and 85 mass% or less. When the liquid composition containing a predetermined amount of the volatile liquid agent is electrostatically sprayed, the volatile liquid agent is sufficiently volatilized, and a good coating film can be formed on the surface of skin or a nail.

Ethanol has high volatility, and therefore fibers comfortable to touch can be formed by using a liquid composition containing ethanol. When at least a part of the volatile liquid agent is ethanol, the content of ethanol is preferably 50 mass% or more, more preferably 65 mass% or more, and still more preferably 80 mass% or more of the total amount of the volatile liquid agent. The content is preferably 100 mass% or less. Ethanol is preferably 50 mass% or more and 100 mass% or less, more preferably 65 mass% or more and 100 mass% or less, and still more preferably 80 mass% or more and 100 mass% or less of the total amount of the volatile liquid agent.

The liquid composition contains a water-insoluble polymer to form a fiber. The water-insoluble polymer used is a substance that can be dissolved in a volatile liquid agent. The dissolution of the water-insoluble polymer means that it is visually confirmed to be in a uniform state when it is added to the volatile liquid agent at 20°C. In this case, the volatile liquid agent containing the water-insoluble polymer is preferably transparent or translucent.

Examples of the water-insoluble polymer for forming a fiber include a polymer which is soluble in the volatile liquid agent and insoluble in water. In the present specification, the "water-soluble polymer" refers to a polymer obtained by immersing 1 g of a polymer in 10 g of ion-exchanged water, and after elapse of 24 hours in an environment of 1 atm and 23°C, dissolving 0.5 g or more of the immersed polymer in water. On the other hand, in the present specification, the term "water-insoluble polymer" refers to a polymer in which 0.5 g or more of the immersed polymer is not dissolved when the same polymer is immersed in ion-exchanged water under the same conditions, in other words, the dissolved amount is less than 0.5 g.

Examples of the polymer which is water-insoluble and can form a fiber include a completely saponified polyvinyl alcohol which is insolubilized after film formation. In addition, it is also possible to use a polymer that is crosslinked after film formation by using a crosslinking agent in combination. Specific examples thereof include a partially saponified polyvinyl alcohol, oxazoline-modified silicones such as a poly (N-propanoylethyleneimine) graft-dimethylsiloxane/y-aminopropylmethylsiloxane copolymer, polyester resins such as polyvinyl acetal diethylaminoacetate, zein (main component of corn protein), polyester, and a polylactic acid (PLA), acrylic resins such as a polyacrylonitrile resin and a polymethacrylic acid resin, a polystyrene resin, a polyvinyl butyral resin, a polyethylene terephthalate resin, a polybutylene terephthalate resin, a polyurethane resin, a polyamide resin, a polyimide resin, and a polyamideimide resin.

The water-insoluble polymer can be used alone or in combination of two or more kinds thereof. As the water-insoluble polymer, it is preferable to use one kind or two or more kinds selected from a completely saponified polyvinyl alcohol insolubilized after film formation, a partially saponified polyvinyl alcohol crosslinked after film formation by use in combination with a crosslinking agent, a polyvinyl butyral resin, a polyurethane resin, an acrylic resin such as a polymethacrylic acid resin, an oxazoline-modified silicone such as polyvinyl acetal diethylaminoacetate, a poly (N-propanoylethyleneimine) graft-dimethylsiloxane/γ-aminopropylmethylsiloxane copolymer, a polylactic acid (PLA), and zein.

As the water-insoluble polymer, a partially saponified polyvinyl alcohol, a completely saponified polyvinyl alcohol, a polyvinyl butyral resin, a polymethacrylic resin, and a polyurethane resin are more preferable, and a partially saponified polyvinyl alcohol, a completely saponified polyvinyl alcohol, and a polyvinyl butyral resin are still more preferable, since they are excellent in dispersibility in the volatile liquid agent and can form fibers comfortable to touch. A polyvinyl butyral resin is particularly preferable in that a film can be stably and efficiently formed on the surface of skin or a nail. From the viewpoint of improving the durability of the coating film and from the viewpoint of the followability to skin, it is preferable to contain a polyvinyl butyral resin.

The content of the water-insoluble polymer in the liquid composition is preferably 1 mass% or more, more preferably 3 mass% or more, and still more preferably 5 mass% or more. In addition, the content of the water-insoluble polymer in the liquid composition is preferably 35 mass% or less, more preferably 30 mass% or less, still more preferably 25 mass% or less, and still more preferably 20 mass% or less.

The content of the water-insoluble polymer in the liquid composition is preferably 1 mass% or more and 30 mass% or less, more preferably 3 mass% or more and 25 mass% or less, still more preferably 5 mass% or more and 20 mass% or less, and still more preferably 5 mass% or more and 35 mass% or less. By electrostatically spraying the liquid composition containing a predetermined amount of the water-insoluble polymer, a film can be stably and efficiently formed.

The liquid composition preferably contains water. Water can be ionized to impart conductivity to the liquid composition. By using the conductive liquid composition, a film is stably formed on the surface of skin or a nail. In addition, the coating film formed using the liquid composition containing water has high durability and is excellent in adhesion to skin and nails. The coating film also has a good appearance. In consideration of these, the content of water in the liquid composition is preferably 0.2 mass% or more and 25 mass% or less, and more preferably 0.3 mass% or more and 20 mass% or less. The content of water is more preferably 0.4 mass% or more and 10 mass% or less because the coating film can be favorably formed even in an environment with high humidity.

The liquid composition can further contain other components. Examples of the other components include polyols, oils which are liquid at 20°C, plasticizers for water-insoluble polymers, conductivity control agents for liquid compositions, powders such as water-soluble polymers, coloring pigments, and extender pigments, dyes, fragrances, repellents, antioxidants, stabilizers, preservatives, and various vitamins. When the other components are contained in the liquid composition, the content of the other components is preferably 0.1 mass% or more and 30 mass% or less, and more preferably 0.5 mass% or more and 20 mass% or less.

The content of the powder or granular material in the liquid composition is preferably 0.5 mass% or less, more preferably 0.2 mass% or less, still more preferably 0.05 mass% or less, and particularly preferably 0 mass% from the viewpoint of the spraying property.

Glycol may be contained as long as it is 10 mass% or less of the liquid composition. Examples of the glycol include ethylene glycol, propylene glycol, butylene glycol, diethylene glycol, dipropylene glycol, and polypropylene glycol. The content of the glycol in the liquid composition is preferably 3 mass% or less, more preferably 1 mass% or less, and still more preferably substantially 0 mass% in order to sufficiently volatilize the volatile liquid agent at the time of electrostatic spraying to form a fiber comfortable to touch.

In consideration of the spinnability at the time of electrostatic spraying, the viscosity of the liquid composition is preferably 2 mPa·s or more and 3000 mPa·s or less, more preferably 10 mPa·s or more and 1500 mPa·s or less, still more preferably 15 mPa·s or more and 1000 mPa·s or less, still more preferably 15 mPa·s or more and 800 mPa·s or less at 25°C. By spraying the liquid composition having a viscosity in a predetermined range to a predetermined object, fibers excellent in durability and comfortable to touch can be stably formed.

The viscosity of the liquid composition can be measured using an E-type viscometer. As the E-type viscometer, for example, an E-type viscometer (VISCONIC EMD) manufactured by TOKYO KEIKI INC. is used. The measurement conditions in this case are 25°C and a cone-plate rotor No. 43, and an appropriate rotational speed is selected according to the viscosity. Specifically, when the viscosity is 500 mPa·s or more, the rotational speed is set to 5 rpm, and when the viscosity is 150 mPa·s or more and less than 500 mPa·s the rotational speed is set to 10 rpm, and when the viscosity is less than 150 mPa·s, the rotational speed is set to 20 rpm.

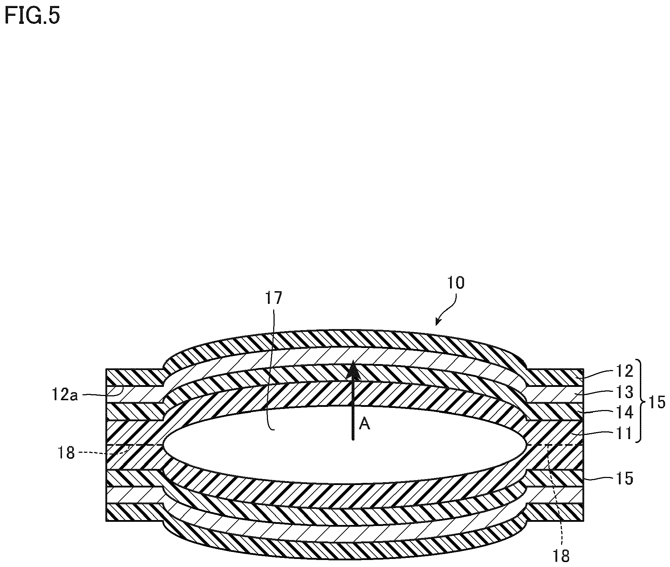

The cartridge 30 for an electrostatic spraying device according to the present embodiment includes the storage bag 10 suitable for storing the liquid composition as described above. As illustrated in Fig. 5, the storage bag 10 includes laminates 15 each including an innermost layer 11, an outermost layer 12 on a side opposite to the innermost layer 11, and a barrier layer 13 between the innermost layer 11 and the outermost layer 12. A storage section 17 storing the liquid composition is surrounded by a joint portion 18 formed by joining edges of the facing innermost layers 11, and is formed in a sealed bag shape. The joining is usually performed by heat fusion. The storage bag 10 illustrated further includes an intermediate layer 14 between the innermost layer 11 and the barrier layer 13.

Since the innermost layer 11 is present on the inner surface of the storage bag 10 and comes into contact with the liquid composition, it is preferable that the innermost layer be formed of a sealant layer having resistance to the liquid composition and having a sealant effect (thermal fusion). Specifically, the material of the innermost layer 11 can be selected from low density polyethylene (LDPE), linear low density polyethylene (LLDPE), a blend of LDPE and LLDPE, medium density polyethylene (MDPE), high density polyethylene (HDPE), metallocene polyethylene, an ethylene-vinyl acetate copolymer film (EVA), cast polypropylene (CPP), and the like.

Among the above-mentioned materials, low density polyethylene (LDPE), linear low density polyethylene (LLDPE), or a blend of LDPE and LLDPE is preferable. The thickness of the innermost layer 11 is preferably 20 µm or more, and more preferably 30 µm or more. In addition, the thickness of the innermost layer 11 is preferably 150 µm or less, and more preferably 80 µm or less.

The outermost layer 12 is present on the outer surface of the storage bag 10 to protect the storage bag 10. As a material of the outermost layer 12, polyethylene terephthalate (PET), oriented polypropylene (OPP), oriented nylon (ONy), or the like can be used, and PET is preferable. The thickness of the outermost layer 12 is preferably 8 µm or more, and more preferably 10 µm or more. The thickness of the outermost layer 12 is preferably 30 µm or less, and more preferably 20 µm or less.

As illustrated in Fig. 5, the outermost layer 12 may have a surface with a print 12a on the barrier layer 13 side. Generally, ink (for example, gravure ink) used for printing contains, as a main component, a colorant which is soluble in a volatile liquid agent, and therefore the print 12a may be damaged by the liquid composition.

The barrier layer 13 interposed between the innermost layer 11 and the outermost layer 12 suppresses permeation of the liquid composition from the storage section 17 to the outermost layer 12. Examples of the barrier layer 13 include an aluminum sheet and a vapor-deposited film. The thickness of the aluminum sheet is preferably 3 µm or more, and more preferably 5 µm or more from the viewpoint of achieving both the deformability of the bag and the barrier performance. The thickness of the aluminum sheet is preferably 15 µm or less, and more preferably 10 µm or less from the same viewpoint.

When a vapor-deposited film is used as the barrier layer 13, a vapor-deposited film obtained by depositing aluminum, aluminum oxide, or silica on a resin film can also be used. As the resin film, a PET film, a polypropylene (PP) film, or the like is used. The thickness of the resin film is preferably 10 µm or more, and more preferably 15 µm or more. The thickness of the resin film is preferably 30 µm or less, and more preferably 20 µm or less. The thickness of the vapor-deposited layer is not particularly limited, but is generally about 10 nm or more and 500 nm or less. When a resin film is provided on the intermediate layer 14 side with respect to the vapor-deposited layer, the resin film can also serve as the intermediate layer.

Materials of the resin film and the vapor-deposited layer can be appropriately combined to form the vapor-deposited film. Among them, it is preferable to use a PET film as the resin film and to use aluminum as the vapor-deposited layer.

Furthermore, as the barrier layer 13, a film of an ethylene vinyl alcohol copolymer (EVOH) can also be used. EVOH is known as a resin having an excellent gas barrier property. The thickness of the EVOH film is preferably 10 µm or more, and more preferably 30 µm or more. The thickness of the EVOH film is preferably 60 µm or less, and more preferably 50 µm or less.

Since the aluminum sheet and the vapor-deposited film have a light shielding property, when they are used as the barrier layer 13, the liquid composition in the storage section 17 can be effectively protected. Furthermore, it is not necessary to impart a light shielding property to the print 12a, and the number of colors used for printing can be increased. Furthermore, the glossiness can improve the design property.

Since transpiration of the volatile liquid agent is suppressed by the barrier layer 13, precipitation of a polymer or the like contained in the liquid composition can be suppressed. As a result, the liquid composition can be stably stored.

The intermediate layer 14 enhances adhesion between the barrier layer 13 and the innermost layer 11, and more reliably suppresses peeling at the interface between the barrier layer 13 and the innermost layer 11. The intermediate layer 14 is desirably formed of a material for which an adhesive having adhesion compatibility with both the barrier layer 13 and the innermost layer 11 can be used. The intermediate layer 14 is preferably made of polyethylene terephthalate (PET). For example, when the barrier layer 13 is made of an aluminum sheet and the innermost layer 11 is made of an LLDPE film, a PET film can be used as the intermediate layer 14. In this case, the thickness of the PET film is preferably 10 µm or more, more preferably 12 µm or more, and still more preferably 15 µm or more. The thickness of the PET film is preferably 50 µm or less, and more preferably 30 µm or less.

By providing the intermediate layer 14 between the innermost layer 11 and the barrier layer 13, the rigidity of the laminate 15 is enhanced. Even when the liquid composition is stored in the storage section 17, wrinkles are less likely to occur in the storage bag 10, so that a good appearance is maintained. When a print is made on the storage bag 10, it can be recognized without any inconvenience. In addition, since the storage bag 10 is less likely to be wrinkled, a production lot or the like can be easily printed on the storage bag 10 after the liquid composition is stored in the storage section 17.

Furthermore, when the rigidity of the laminates 15 increases, force with which the storage bag 10 is restored increases and the liquid composition is pushed out when the liquid composition is sprayed by electrostatic force. This leads to a reduction in the amount of the liquid composition remaining in the storage section 17.

The relationship of the thickness of each layer in the laminates 15 can be appropriately determined according to the material or the like to be selected. Considering the storage stability of the liquid composition to be stored, the productivity of the storage bag 10, and the like, it is preferable that the innermost layer 11 be the thickest. The thickness of the innermost layer 11 is, for example, preferably 1 time or more, more preferably 2 times or more, still more preferably 3 times or more the thickness of the intermediate layer 14. The thickness of the innermost layer 11 is preferably 10 times or less, more preferably 8 times or less, still more preferably 6 times or less the thickness of the intermediate layer 14.

Since the intermediate layer 14 is provided to enhance adhesiveness between the innermost layer 11 and the barrier layer 13, an effect can be obtained even if the intermediate layer is thin. However, in a case where improvement in the rigidity of the laminates 15 or the like is required, the intermediate layer 14 has a thickness of preferably about 10 to 100%, more preferably about 20 to 50%, of the thickness of the innermost layer 11.

The storage bag 10 of the present embodiment can be manufactured by arranging the innermost layers 11 so as to face each other in the two laminates 15 each including the innermost layer 11, the intermediate layer 14, the barrier layer 13, and the outermost layer 12, and joining the peripheral edge portion by thermal fusion or the like so as to obtain the storage section 17. The laminate 15 can be produced, for example, by integrating the intermediate layer 14 on the innermost layer 11 via an adhesive and further integrating the barrier layer 13 via an adhesive. As the adhesive, an epoxy-based adhesive, a urethane-based adhesive, or the like can be used.

When an aluminum sheet is used as the barrier layer 13, it can be integrated with the innermost layer 11 and the intermediate layer 14 by an adhesive. On the other hand, when a vapor-deposited film is used as the barrier layer 13, a resin film such as a PET film may be integrated by an adhesive such that the resin film faces the outermost layer 12 side. Similarly, when an EVOH film is used as the barrier layer 13, the barrier layer can be integrated by an adhesive.

On the barrier layer 13, the outermost layer 12 is laminated and integrated via an adhesive. When the outermost layer 12 has the print 12a, the outermost layer 12 is laminated such that the surface on which the print 12a is provided faces the barrier layer 13. In this way, the laminate 15 in which the intermediate layer 14, the barrier layer 13, and the outermost layer 12 are laminated on the innermost layer 11 is obtained. The innermost layers 11 of the obtained laminates 15 are arranged facing each other, and the peripheral edge portion is fused to form the joint portion 18 including the fused portion. By cutting this into a predetermined size, the storage bag 10 having the storage section 17 is manufactured.

In the storage section 17 of the storage bag 10, a predetermined liquid composition containing 50 mass% or more of a volatile liquid agent is stored. Even if such a liquid composition permeates into the laminate 15, the permeation is blocked by the barrier layer 13 as indicated by an arrow A in Fig. 5, so that peeling of the outermost layer 12 is suppressed. Furthermore, the ink of the print 12a provided on the outermost layer 12 is not damaged, and the print 12a can be maintained without being damaged.

In the cartridge 30 for an electrostatic spraying device according to the present invention, the liquid composition containing 50 mass% or more of the volatile liquid agent is stored for preferably 6 months or more, more preferably 1 year or more, and still more preferably 3 years or more.

Note that the present invention is not limited to the above embodiments, and various modifications can be made. For example, in the present embodiment, the joint portion including the fused portion is formed by thermal fusion, but the joint portion may be formed by ultrasonic sealing, high-frequency sealing, or sealing with an adhesive.

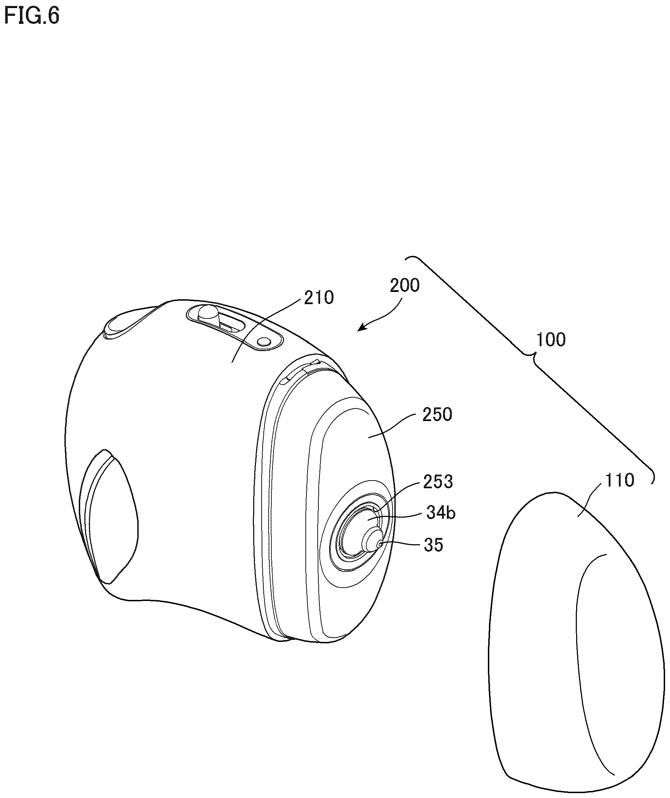

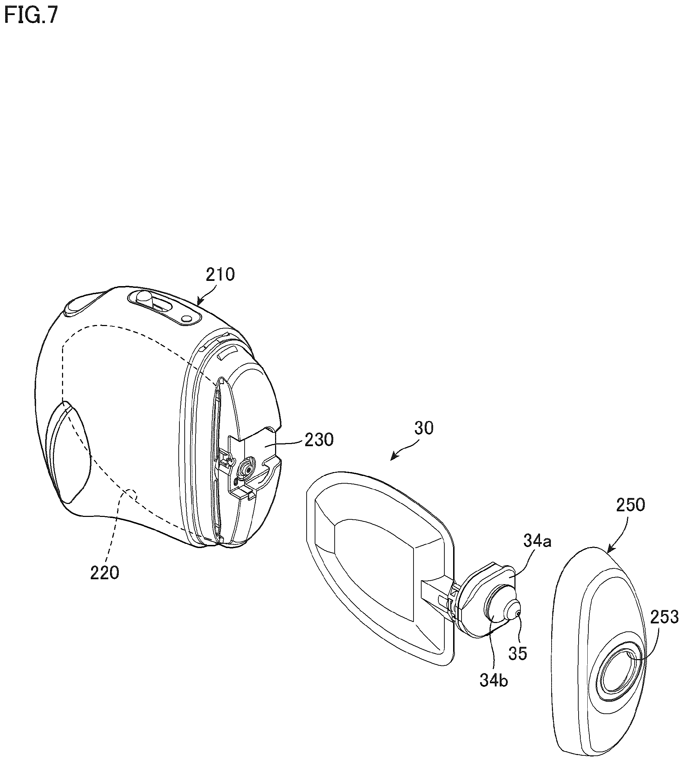

The cartridge 30 for an electrostatic spraying device according to the present invention can be used for the electrostatic spraying device 100, for example, as illustrated in Figs. 6 and 7. The electrostatic spraying device 100 includes an electrostatic spraying device main body 200 (device main body) in which the cartridge 30 for an electrostatic spraying device is detachably housed, and a cap 110 attached to the electrostatic spraying device main body 200, and is configured such that the cap 110 is removed to spray the liquid composition.

As illustrated in Fig. 7, the electrostatic spraying device main body 200 includes a housing 210 and a cover 250 attached to the housing 210. The housing 210 has a housing space 220 for the cartridge 30 for an electrostatic spraying device, and the cartridge 30 for an electrostatic spraying device and the cover 250 are detachable. The cover 250 is provided with an opening 253 that fits the nozzle 34b of the nozzle portion 34 in the cartridge 30 for an electrostatic spraying device. The housing 210 is formed of an insulating material, and the electrostatic spraying device main body 200 includes a battery, a motor, a high voltage generator, a control device, and an operation switch.

The base 34a of the nozzle portion 34 is detachably attached to the attachment target portion 230 of the housing 210. The storage bag 10 is housed inside the housing 210 in a state where the base 34a is attached to the attachment target portion 230 of the housing 210.

The housing 210 and the cover 250 are formed of an insulating material, that is, a material that does not easily conduct electricity. Examples of the insulating material used for the housing 210 and the cover 250 include an insulating organic material such as a synthetic resin, an insulating inorganic material such as glass or ceramic, and the like. As the insulating organic material, for example, polypropylene (PP), polyacetal, a polyether ether ketone (PEEK), polytetrafluoroethylene (PTFE), monomer-cast nylon, an ABS resin, polycarbonate (PC), polyethylene terephthalate (PET), polyvinyl chloride (PVC), and the like can be used.

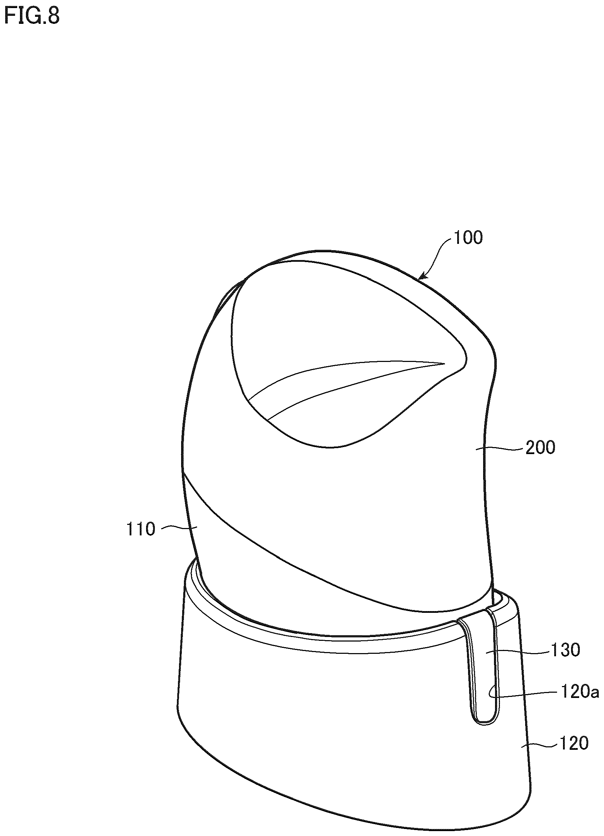

As illustrated in Fig. 8, the electrostatic spraying device 100 can be mounted by inserting the cap 110 side into the mounting table 120 in a state where the cap 110 is mounted. When the electrostatic spraying device 100 is mounted as described above, since the nozzle portion 34 faces downward, and the flow path of the nozzle 34b is filled with the liquid composition up to the vicinity of the spray hole 35. As a result, the entry of air into the flow path of the nozzle 34b is suppressed, and the possibility that the liquid composition solidifies inside the flow path is reduced. In this way, the liquid composition can be continuously sprayed more stably.

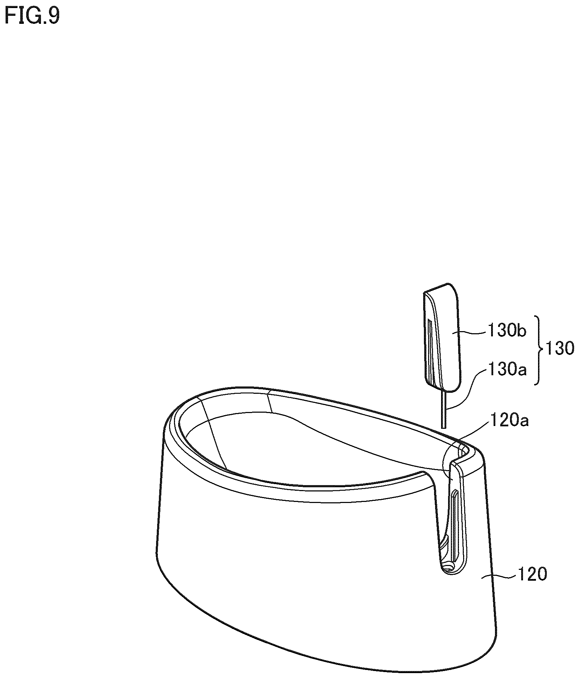

A notch portion 120a as illustrated in Figs. 8 and 9 is formed in a part of the peripheral edge of the mounting table 120, and a cleaning member 130 including a cleaning needle 130a can be stored in the notch portion 120a. The knob portion 130b of the cleaning member 130 has an outer shape matching the notch portion 120a, and is stored in a state where the cleaning needle 130a is inserted in a hole (not illustrated) formed in the bottom surface of the notch portion 120a. Even if the liquid composition solidifies in the flow path of the nozzle 34b, the flow path of the nozzle 34b can be secured by cleaning the spray hole 35 and the nozzle 34b using the cleaning member 130.

The cartridge 30 for an electrostatic spraying device according to the present embodiment includes the storage bag 10 having the storage section 17 in which the liquid composition is stored. The stored liquid composition contains 50 mass% or more of a volatile liquid agent selected from alcohols and ketones. The storage section 10 is surrounded by the joint portion 18 formed by joining the pair of laminates 15, and each of the laminates 14 includes the innermost layer 11 on the joint portion 18 side, the outermost layer 12 on the side opposite to the innermost layer 11, and the barrier layer 13 between the innermost layer 11 and the outermost layer 12. As a result, the cartridge 30 for an electrostatic spraying device according to the present embodiment can prevent delamination of the laminates 14 of the storage bag 10 and store the liquid composition containing the volatile liquid agent.

Although the preferred embodiment of the present invention has been described above as an example, the technical scope of the present invention is not limited to the scope described in the above-described embodiment. Various modifications or improvements can be made to each of the above-described embodiments.

Regarding the above-described embodiments, the present invention further discloses the following cartridge for an electrostatic spraying device.

<1> A cartridge for an electrostatic spraying device, the cartridge comprising a storage bag having a storage section in which a liquid composition is stored,
   the storage section being surrounded by a joint portion formed by joining a pair of laminates,
   each of the laminates comprising an innermost layer on the joint portion side, an outermost layer on a side opposite to the innermost layer, and a barrier layer between the innermost layer and the outermost layer, and
   the liquid composition comprising 50 mass% or more of a volatile liquid agent selected from alcohols and ketones.
<2> The cartridge for an electrostatic spraying device according to <1>, in which a print is made on a surface of the outermost layer on the barrier layer side.
<3> The cartridge for an electrostatic spraying device according to <1> or <2>, in which the joint portion is a fused portion formed by fusion.
<4> The cartridge for an electrostatic spraying device according to any one of <1> to <3>, in which the innermost layer is a sealant layer.
<5> The cartridge for an electrostatic spraying device according to any one of <1> to <4>, further comprising an intermediate layer between the innermost layer and the barrier layer.
<6> The cartridge for an electrostatic spraying device according to <5>, in which the intermediate layer is made of polyethylene terephthalate.
<7> The cartridge for an electrostatic spraying device according to any one of <1> to <6>, in which the cartridge is detachable from a device main body of an electrostatic spraying device that sprays the liquid composition by applying a voltage to the liquid composition, and the cartridge further comprises a connecting portion to which a nozzle portion that sprays the liquid composition is connected, and a pump that guides the liquid composition to a spray hole of the nozzle portion.
<8> The cartridge for an electrostatic spraying device according to <7>, in which the nozzle portion comprises a pump chamber in which the pump is housed, and the pump chamber is made of a material resistant to the liquid composition.
<9> The cartridge for an electrostatic spraying device according to <8>, in which the material resistant to the liquid composition of the pump chamber is polypropylene.
<10> The cartridge for an electrostatic spraying device according to any one of <5> to <9>, in which a thickness of the innermost layer is 1 time or more and 10 times or less a thickness of the intermediate layer.
<11> The cartridge for an electrostatic spraying device according to any one of <5> to <9>, in which a thickness of the innermost layer is 1 times or more, preferably 2 times or more, more preferably 3 times or more, 10 times or less, preferably 8 times or less, and more preferably 6 times or less a thickness of the intermediate layer.
<12> The cartridge for an electrostatic spraying device according to any one of <5> to <11>, in which a thickness of the intermediate layer is 10 to 100%, preferably 20 to 50%, of a thickness of the innermost layer.
<13> The cartridge for an electrostatic spraying device according to any one of <5> to <12>, in which a thickness of the intermediate layer is 10 µm or more and 50 µm or less, and preferably 10 µm or more and 30 µm or less.
<14> The cartridge for an electrostatic spraying device according to any one of <1> to <13>, in which the barrier layer is an aluminum sheet or a vapor-deposited film.
<15> The cartridge for an electrostatic spraying device according to any one of <1> to <14>, in which the barrier layer is an aluminum sheet, and a thickness of the aluminum sheet is 3 µm or more, preferably 5 µm or more, and 15 µm or less, preferably 10 µm or less.
<16> The cartridge for an electrostatic spraying device according to any one of <1> to <14>, in which the barrier layer is a vapor-deposited film comprising a resin film and a vapor-deposited layer on the resin film.
<17> The cartridge for an electrostatic spraying device according to <16>, in which the resin film is selected from a polyethylene terephthalate (PET) film and a polypropylene (PP) film.
<18> The cartridge for an electrostatic spraying device according to <16> or <17>, in which the resin film has a thickness of 10 µm or more, preferably 15 µm or more, and 30 µm or less, preferably 20 µm or less.
<19> The cartridge for an electrostatic spraying device according to any one of <16> to <18>, in which a thickness of the deposited layer is 10 nm or more and 500 nm or less.
<20> The cartridge for an electrostatic spraying device according to any one of <16> to <19>, in which the vapor-deposited layer is made of aluminum.
<21> The cartridge for an electrostatic spraying device according to any one of <1> to <20>, in which a thickness of the outermost layer is 8 µm or more, preferably 10 µm or more, and 30 µm or less, preferably 20 µm or less.
<22> The cartridge for an electrostatic spraying device according to any one of <1> to <21>, in which a material of the outermost layer is selected from polyethylene terephthalate (PET), oriented polypropylene (OPP), and oriented nylon (ONy).
<23> The cartridge for an electrostatic spraying device according to any one of <1> to <22>, in which a content of the volatile liquid agent in the liquid composition is 95 mass% or less.
<24> The cartridge for an electrostatic spraying device according to any one of <1> to <23>, in which a content of the volatile liquid agent in the liquid composition is 50 mass% or more, preferably 55 mass% or more, more preferably 60 mass% or more, 95 mass% or less, preferably 94 mass% or less, and more preferably 93 mass% or less.
<25> The cartridge for an electrostatic spraying device according to any one of <1> to <24>, in which a content of the volatile liquid agent in the liquid composition is 50 mass% or more and 95 mass% or less, preferably 55 mass% or more and 94 mass% or less, and more preferably 60 mass% or more and 93 mass% or less.
<26> The cartridge for an electrostatic spraying device according to any one of <1> to <25>, in which at least a part of the volatile liquid agent is ethanol.
<27> The cartridge for an electrostatic spraying device according to <26>, in which a content of the ethanol is 50 mass% or more, preferably 65 mass% or more, more preferably 80 mass% or more, and 100 mass% or less of the total amount of the volatile liquid agent.
<28> The cartridge for an electrostatic spraying device according to <26> or <27>, in which a content of the ethanol is 50 mass% or more and 100 mass% or less, preferably 65 mass% or more and 100 mass% or less, and more preferably 80 mass% or more and 100 mass% or less of the total amount of the volatile liquid agent.
<29> The cartridge for an electrostatic spraying device according to any one of <1> to <28>, in which the volatile liquid agent is ethanol.
<30> The cartridge for an electrostatic spraying device according to any one of <1> to <29>, in which the electrostatic spraying device is used as an electrostatic spinning device.

### Example

Next, Example of the present invention will be described, but the present invention is not limited thereto.

### <Example>

A laminate 15 was prepared in which an intermediate layer 14 (PET film, a thickness of 12 µm), a barrier layer 13 (aluminum sheet, a thickness of 7 µm), and an outermost layer 12 (PET film, a thickness of 12 µm) were laminated on an innermost layer 11 (LLDPE film with a thickness of 40 µm), and the respective layers were integrated by a urethane-based adhesive. A print 12a is made on one surface of the PET film used as the outermost layer 12 with an inorganic pigment or an organic pigment ink. The outermost layer 12 is laminated on the barrier layer 13 and has the surface having the print 12a and facing the barrier layer 13.

The laminate 15 was cut into a size of 75 mm × 100 mm, and the innermost layers 11 were arranged facing each other, and the peripheral edge portion was thermally fused with a width of 5 mm to form a joint portion 18 consisting of a thermally fused portion, thereby obtaining a storage bag 10 of Example. Heat sealing was performed at a temperature of 150 to 160°C using a heat sealer.

### <Comparative Example 1>

A storage bag of Comparative Example 1 was produced using a laminate in which an innermost layer (cast polypropylene (CPP) film, a thickness of 20 µm) and an outermost layer (OPP film, a thickness of 20 µm) were integrated by an adhesive. A print formed with the same ink as described above is made on one surface of the outermost layer. The outermost layer is laminated on the innermost layer such that the printed surface faces the innermost layer side.

The storage bag of Comparative Example 1 was produced by the same method as in Example except that such a laminate was used and the heat-fusion temperature was changed to 160 to 170°C.

### <Comparative Example 2>

A storage bag was produced in the same manner as in Comparative Example 1 except that an innermost layer (LLDPE film, a thickness of 40 µm) and an outermost layer (ONy film, a thickness of 15 µm) were used. The outermost layer has a print formed of the same ink as described above on one surface. The outermost layer is laminated on the innermost layer such that the printed surface faces the innermost layer side.

In the storage bags of Example and Comparative Examples, a liquid composition was stored to prepare test pieces. The liquid composition contains 80.0 mass% of ethanol as a volatile liquid agent, and further contains 11.5 mass% of a water-insoluble polymer (polyvinyl butyral (manufactured by SEKISUI CHEMICAL CO., LTD., trade name: S-LEC B BM-1)), 4.0 mass% of polyethylene glycol, 4.0 mass% of silicone oil, and 0.5 mass% of water.

Each storage bag was filled with 5 g of the obtained liquid composition, and the opening was sealed by heat sealing to obtain a test piece. The sealed test piece was left at 40°C for 1 month, and the state of the laminate in the storage bag was visually confirmed. As for printing, the state of damage was visually examined.

As a result, in the case of the storage bag of Example, peeling of the outermost layer was not confirmed, and the print was not damaged due to intrusion of the liquid composition.

On the other hand, in the case of each of the storage bags of Comparative Examples 1 and 2, the print was damaged in addition to peeling of the outermost layer. Each of the storage bags of Comparative Examples 1 and 2 does not have a barrier layer, and the outermost layer is directly laminated on the innermost layer with an adhesive interposed therebetween. Therefore, it is presumed that the liquid composition stored in the storage section reaches the outermost layer, and that peeling of the outermost layer or damage to the print occurs.

### Reference Signs List

- 10: Storage bag
- 10a: Outer edge
- 10b: Flexible region
- 11: Innermost layer
- 12: Outermost layer
- 12a: Print
- 13: Barrier layer
- 14: Intermediate layer
- 15: Laminate
- 17: Storage section
- 18: Joint portion
- 30: Cartridge for an electrostatic spraying device
- 32: Connecting portion
- 32a: Column portion
- 32b: Engaging plate portion
- 34: Nozzle portion
- 34a: Base
- 34b: Nozzle
- 34c: Engaging piece
- 35: Spray hole
- 134: Pump cover
- 100: Electrostatic spraying device
- 110: Cap
- 120: Mounting table
- 130: Cleaning member

## Claims

1. A cartridge for an electrostatic spraying device, the cartridge comprising a storage bag having a storage section in which a liquid composition is stored,
the storage section being surrounded by a joint portion formed by joining a pair of laminates,
each of the laminates comprising an innermost layer on the joint portion side, an outermost layer on a side opposite to the innermost layer, and a barrier layer between the innermost layer and the outermost layer, and
the liquid composition comprising 50 mass% or more of a volatile liquid agent selected from alcohols and ketones.

2. The cartridge for an electrostatic spraying device according to claim 1, wherein a print is made on a surface of the outermost layer on the barrier layer side.

3. The cartridge for an electrostatic spraying device according to claim 1 or 2, wherein the joint portion is a fused portion formed by fusion.

4. The cartridge for an electrostatic spraying device according to any one of claims 1 to 3, wherein the innermost layer is a sealant layer.

5. The cartridge for an electrostatic spraying device according to any one of claims 1 to 4, further comprising an intermediate layer between the innermost layer and the barrier layer.

6. The cartridge for an electrostatic spraying device according to claim 5, wherein the intermediate layer is made of polyethylene terephthalate.

7. The cartridge for an electrostatic spraying device according to any one of claims 1 to 6, wherein
the cartridge is detachable from a device main body of an electrostatic spraying device that sprays the liquid composition by applying a voltage to the liquid composition, and
the cartridge further comprises:
a connecting portion to which a nozzle portion that sprays the liquid composition is to be connected; and
a pump that guides the liquid composition to a spray hole of the nozzle portion.

8. The cartridge for an electrostatic spraying device according to claim 7, wherein the nozzle portion has a pump chamber in which the pump is housed, and the pump chamber is made of a material resistant to the liquid composition.

9. The cartridge for an electrostatic spraying device according to claim 8, wherein the material resistant to the liquid composition of the pump chamber is polypropylene.

10. The cartridge for an electrostatic spraying device according to any one of claims 5 to 9, wherein a thickness of the innermost layer is 1 time or more and 10 times or less a thickness of the intermediate layer.

11. The cartridge for an electrostatic spraying device according to any one of claims 5 to 9, wherein a thickness of the intermediate layer is 10 to 100%, preferably 20 to 50%, of a thickness of the innermost layer.

12. The cartridge for an electrostatic spraying device according to any one of claims 5 to 11, wherein a thickness of the intermediate layer is 10 µm or more and 50 µm or less, and preferably 10 µm or more and 30 µm or less.

13. The cartridge for an electrostatic spraying device according to any one of claims 1 to 12, wherein the barrier layer is an aluminum sheet or a vapor-deposited film.

14. The cartridge for an electrostatic spraying device according to any one of claims 1 to 13, wherein the barrier layer is an aluminum sheet, and a thickness of the aluminum sheet is 3 µm or more, preferably 5 µm or more, and 15 µm or less, preferably 10 µm or less.

15. The cartridge for an electrostatic spraying device according to any one of claims 1 to 14, wherein a content of the volatile liquid agent in the liquid composition is 95 mass% or less.

16. The cartridge for an electrostatic spraying device according to any one of claims 1 to 15, wherein the electrostatic spraying device is used as an electrostatic spinning device.
